# EUROPEAN PATENT APPLICATION

(11) **EP 2 762 365 A1**
(43) Date of publication of application: **06.08.2014**
(21) Application number: 13305117.7
(22) Date of filing: 01.02.2013
(51) Int. Cl.: B60R 13/10

(54) **A method and device for authenticating a license plate number for the purpose of authenticating a vehicle operation permission**

(71) Applicant: Alcatel Lucent, 75007 Paris (FR)
(72) Inventor: Weigmann, Walter, 70435 Stuttgart (DE); Templ, Wolfgang, 70435 Stuttgart (DE)
(74) Representative: Kröhnert, Michael

(57) **Abstract**

The invention concerns a device (100) and a respective method for authenticating vehicle operation permission the device (100) being adapted to be detachably mounted to a vehicle, comprising a surface (102) adapted to receive a license plate number, characterized in that the device (100) comprises an electronic device (101) operable to interact with a vehicle controller to authenticate the license plate number. Furthermore the invention concerns a vehicle controller (150) and respective method, the vehicle controller (150) operable to interact with the device (100) to authenticate the license plate number of the device (100).

## Description

### Field of the invention

The invention relates to a method and devices for authenticating vehicle operation permission.

### Background

To authenticate vehicle operation permission license plates with license plate numbers are used. License plate numbers are typically linked to the owner of the vehicle in a central data base. To avoid fraud, security license plates are commonly used. Security license plates comprise for example a hologram or an optically variable device (well known as OVD).

Intelligent license tag systems use for example a sticker made of a self destructive diffraction foil. This sticker is fixed on the vehicle. Any attempt to remove the sticker will irrevocably destroy it.

The sticker contains the same information as the license plate. The information may be printed on the sticker and/or included in a radio frequency identification tag being part of the sticker.

### Summary

The object of the invention is to provide a method and devices for secure and flexible authentication of the vehicle operation permission.

The main idea of the invention is a device adapted to be detachably mounted to a vehicle, comprising a surface adapted to receive a license plate number, **characterized in that** the device comprises an electronic device operable to interact with a vehicle controller to authenticate the license plate number.

Advantageously the electronic device is operable to output information about the license plate via a data link.

Advantageously the device comprises a connector adapted to connect the electronic device, in particular to the outside of the device.

Advantageously the device comprises a sender adapted to connect the electronic device.

Advantageously the device is adapted to connect the electronic device to the vehicle controller when mounted to the vehicle.

Advantageously the surface is adapted to receive an embossed license plate number.

Advantageously the electronic device and the surface are joined to render non-destructive separation of the electronic device and the surface impossible.

Advantageously the information about the license plate is stored in the device.

The invention concerns further a vehicle controller operable to interact with the device to authenticate the license plate number of the device.

Advantageously the vehicle controller comprises a receiver adapted to receive information about the license plate via a data link.

Advantageously the vehicle controller is adapted to compare the information about the license plate to predetermined information.

Advantageously the vehicle controller is adapted to trigger a predetermined state of the vehicle depending on the result of the authentication.

The invention concerns furthermore a vehicle comprising the vehicle controller.

Advantageously the vehicle comprises a connector adapted to connect the vehicle controller to the device.

The invention also concerns a method comprising
- receiving information about a license plate,
- comparing the information about the license plate to predetermined information,
- triggering a predetermined state of the vehicle depending on the result of the comparison.

Further developments of the invention can be gathered from dependent claims and the following description.

### Brief description of the figures

In the following the invention will be explained further making reference to the attached drawings.
Fig. 1 schematically shows devices for authenticating vehicle operation permission.
Fig. 2 schematically shows other devices for authenticating vehicle operation permission.
Fig. 3 schematically shows a vehicle having the devices for authenticating vehicle operation permission.
Fig. 4 schematically shows a method for authenticating vehicle operation permission.

### Description of the embodiments

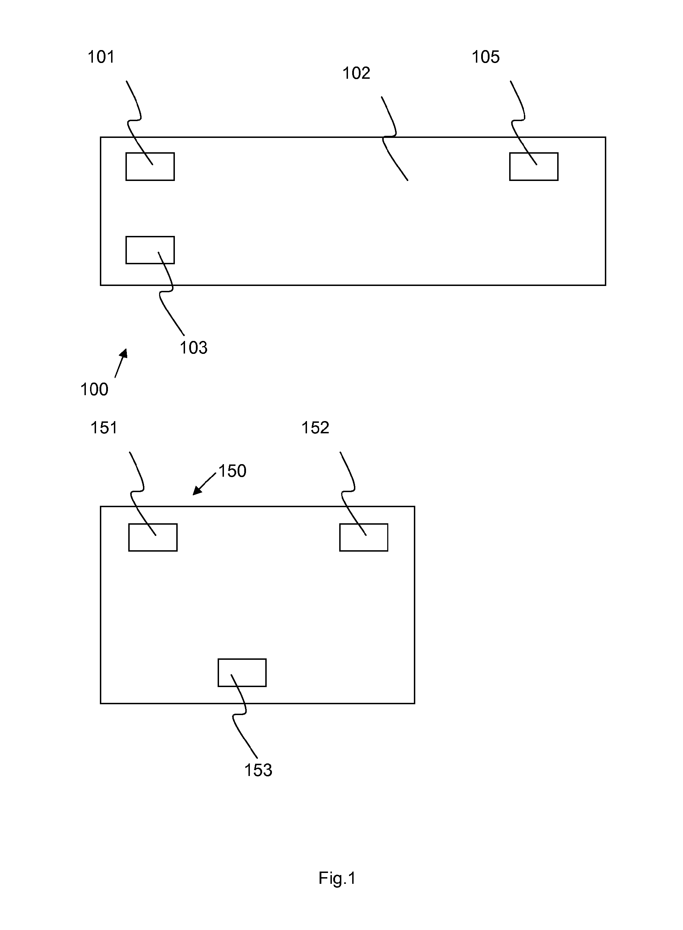

Figure 1 schematically shows devices for authenticating vehicle operation permission according to a first embodiment. Figure 1 depicts a device 100 adapted to be detachably mounted to a vehicle. The device 100 comprises a surface 102 adapted to receive a license plate number. The surface 102 may be made of alloy adapted to receive an embossed license plate number. The surface 102 may comprise a security feature such as a hologram or an optically variable device foil. The surface 102 may be of any other type of material such as other metal suitable for embossing or plastics for imprinting. Instead of embossing or imprinting the surface 102 may be adapted to receive the license plate number painted on the surface 102.

The device 100 may be a license plate blank, i.e. the license plate number may not have been embossed or painted on the surface 102, or a license plate with an embossed or painted license plate number on the surface 102.

The device 100 comprises an electronic device 101 operable to interact with a vehicle controller 150 to authenticate the license plate number.

According to the first embodiment the vehicle controller 150 comprises a processor 151 adapted to authenticate the license plate number.

The vehicle controller 150 comprises a receiver 152 adapted to receive information about the license plate via a data link.

The processor 151 is adapted to compare the information about the license plate to predetermined information. The predetermined information is in the example stored in storage 153 in the vehicle controller 150.

The device 100 comprises storage 105 adapted to store the information about the license plate.

The information about the license plate is for example an identifier of the owner. The information may be the license plate number that is painted or embossed to the surface 102. To that end for example during the embossing or the painting of the license plate number the information about the license plate is stored to the storage 105. For example the license plate number embossed or painted to the surface 102 is stored as identification in the storage 105. Alternatively the storage 105 comprises the information about the license plate already, e.g. as identification of the license plate blank. In this case the information is read out form the storage.

In any case the information about the license plate and the license plate number embossed or painted to the surface 102 are linked. Alternatively the information about the license plate is linked to an owner of the vehicle directly. In any case predetermined information is this way linked to the information about the license plate.

The linkage of the vehicle to the owner is for example stored in a database. Additionally according to the example the linkage between the license plate number and the owner is stored in the database. Furthermore the information about the license plate having the license plate number embossed or painted on is stored in the database.

In a preferred embodiment, the vehicle identification number, well known as VIN, is used as predetermined information. This information is available from the coding of the storage 153 by the manufacturer of the vehicle and easily accessible in the vehicle controller 150. In this case, the storage 105 of the device 100 is programmed with the vehicle identification number of the vehicle 160 the license plate number embossed or painted on the surface 102 is for.

Preferably the storage 105 or the storage 153 is protected from write access, either by manufacturing comprising an access protected Electrically Erasable Programmable Read Only Memory (well known as EEPROM) or any other type of non volatile memory, such as a solid state drive or an Erasable Programmable Read Only Memory (well known as EPROM). The write access protection may be achieved either by manufacturing so that non destructive access to program the storage is impossible without proper tools or by software components limiting write access.

The electronic device 101 is operable to output information about the license plate via the data link. The data link may be according to the Controller Area Network, well known as CAN. Any other type of data link such as an inductive link a wired link of the wiring harness or a field bus system such as Fle-xRay may be used.

The device 100 in the example of figure 1 comprises a connector 103 adapted to connect to the electronic device 101, in particular to the outside of the device 100. The connector 103 is for example a Controller Area Network Connector. The connector 103 may be any other type of connector suitable to the wiring harness of the vehicle 160.

Alternatively or additionally, the device may comprise a sender not depicted in figure 1 adapted to connect to the electronic device 101. In this case the electronic device 101 is connected via the sender to the data link and hence the vehicle controller 150. For example the sender is adapted to send the information about the license plate via a Wireless Local Area Network Connection (well known as WLAN). Any other radio frequency such as the well known Radio Frequency Identification may be used. When using Radio Frequency Identification, the electronic device 101, the storage 105 and the sender may be integrated into a Radio Frequency Identification tag.

In any case the device 100 is adapted to connect the electronic device 101 to the vehicle controller 150 when mounted to the vehicle 160, in particular via the data link.

Furthermore in the example, the electronic device 101 and the surface 102 are joined to render non-destructive separation of the electronic device 101 and the surface 102 impossible. To that end, the electronic device 101 may be for example integrated into the surface 102 or fixed to the surface 102 so that any attempt to remove the electronic device 101 from the surface 102 will irrevocably destroy the device 100, the surface 102 or the electronic device 101. For example a self destructing diffraction foil may be used particularly in the example of the radio frequency identification tag.

Furthermore the vehicle controller 150 may be adapted to trigger a predetermined state of the vehicle 160 depending on the result of the authentication. The state is for example defined by the releasing or locking of predetermined functionality of the vehicle 160, such as an immobilizer system of the vehicle 160. The immobilizer system in this example would release the vehicle 160 for driving in case of successful authentication and lock the vehicle 160 to inhibit driving otherwise.

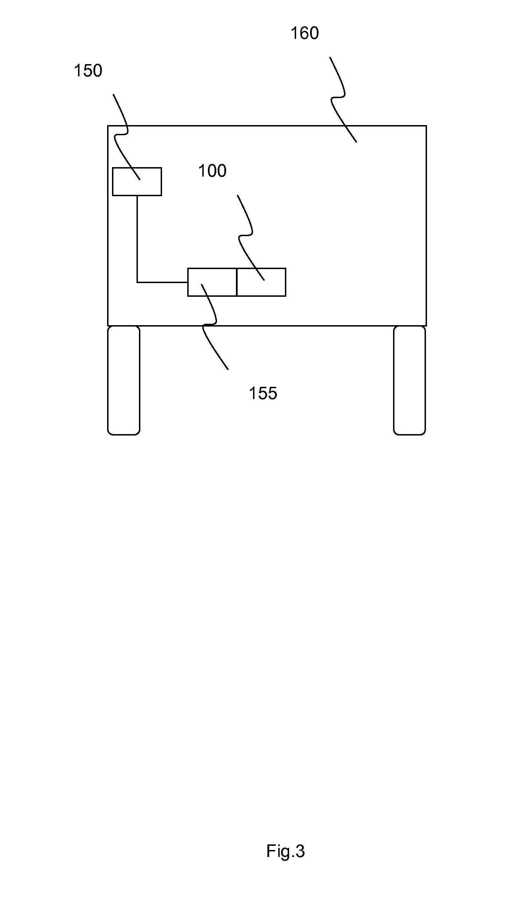

The vehicle 160 is depicted schematically in figure 3 comprising the vehicle controller 150 and a connector 155 adapted to connect the vehicle controller 150 to the device 100. The device 100 is depicted in a mounting position for the license plate. The data link connecting the vehicle controller 150 and the device 100 are depicted in figure 3 as well as solid line.

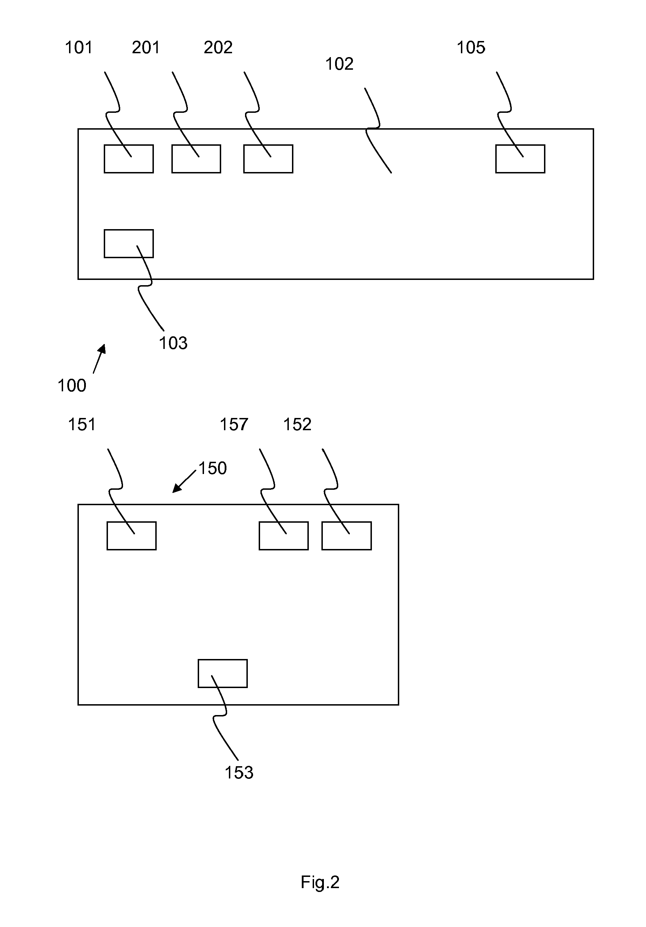

A second embodiment is described referencing in Figure 2 the same components with the same reference signs as described for the first embodiment. Furthermore to the device of the first embodiment, according to the second embodiment the device 100 comprises a processor 201, adapted to authenticate the license plate number.

According to this embodiment the device 100 comprises a receiver 202 adapted to receive information about the license plate via the data link.

The processor 201 is adapted to compare the information about the license plate to predetermined information. The predetermined information is in the example stored in storage 105 in the device 100.

The storage 151 is in this case adapted to store the information about the license plate. The information about the license plate is for example an identifier of the owner. The information may be the license plate number of the rightful owner of the vehicle 160. To that end for example during the sale of the vehicle 160 the information about the license plate is stored to the storage 151. For example the license plate number embossed or painted to the surface 102 of the rightful owner is retrieved from the data base and stored as identification in the storage 105. Alternatively the storage 105 comprises the information about the license plate already, e.g. as identification of the license plate blank. In this case the information is read out form the storage 105 and stored in the storage 153.

In any case the linkage between the information about the license plate and the predetermined information is established.

In a preferred embodiment, the vehicle identification number, well known as VIN, is used as predetermined information. This information is available from the coding of the storage 151 by the manufacturer of the vehicle 160 and easily accessible in the vehicle controller 150. In this case, the storage 105 of the device 100 is programmed with the vehicle identification number of the vehicle 160 the license plate number embossed or painted on the surface 102 is for.

The device 100 comprises the receiver 202, operable to receive information about the license plate via the data link. In this case the vehicle controller 150 comprises a sender 157, operable to send the information. The data link is the same as described in the first embodiment and in Figure 3. Likewise the sender 157 and the receiver 202 are adapted to communicate via the data link.

Furthermore the vehicle controller 150 in this embodiment is adapted to trigger the predetermined state of the vehicle 160 depending on the result of the authentication received from the device 100. Hence electronic device 101 is adapted to send the result and the receiver 153 is adapted to receive this result.

In case of the alternative using the sender of the first embodiment, the sender is adapted to send the result in the second embodiment as well.

In both embodiments the individual components of the device 100 and the vehicle controller 150 may be connected to each other on a circuit board or via a data bus.

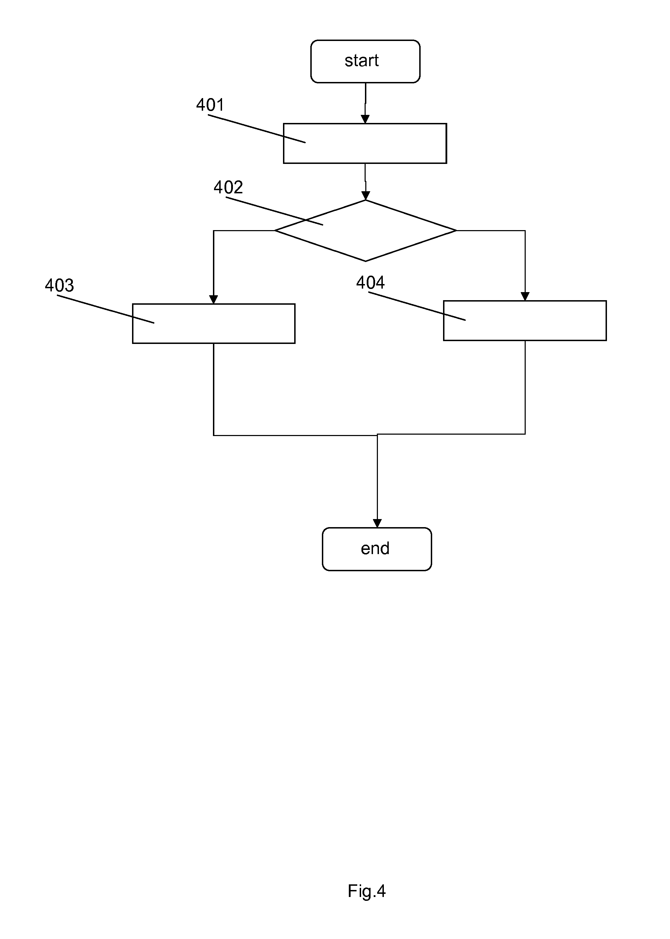

A method for authenticating vehicle operation permission is explained below referencing figure 4. The method starts for example whenever the vehicle controller 150 is switched on, e.g. by a driver turning the vehicle into the ignition on state. After the start a step 401 is executed.

In step 401 the information about the license plate is received. This means that in the preferred embodiment, the vehicle identification number is received. Afterwards a step 402 is executed.

In step 402 the information about the license plate is compared to the predetermined information. This means in the preferred embodiment, the vehicle identification number received is compared to the officially registered vehicle identification number of the vehicle 160. In case of a match, step 403 is executed. Otherwise step 404 is executed.

In step 403, a first predetermined state of the vehicle is triggered. For example the vehicle is released for operation. Afterwards the method ends.

In step 404, a second predetermined state of the vehicle is triggered. For example the vehicle is immobilized, i.e. locked from operation. Afterwards the method ends.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

## Claims

1. A device (100) adapted to be detachably mounted to a vehicle (160), comprising a surface (102) adapted to receive a license plate number, **characterized in that** the device (100) comprises an electronic device (101) operable to interact with a vehicle controller (150) to authenticate the license plate number.

2. The device (100) according to claim 1, wherein the electronic device (101) is operable to output information about the license plate via a data link.

3. The device (100) according to claim 1 or 2, comprising a connector (103) adapted to connect the electronic device (101), in particular to the outside of the device (100).

4. The device (100) according to claim 1 or 2, comprising a sender (103) adapted to connect the electronic device (101).

5. The device (100) according to claim 3 or 4, adapted to connect the electronic device (101) to the vehicle controller (150) when mounted to the vehicle (160).

6. The device (100) according to any of the aforementioned claims, wherein the surface (102) is adapted to receive an embossed license plate number.

7. The device (100) according to any of the aforementioned claims, wherein the electronic device (101) and the surface (102) are joined to render non-destructive separation of the electronic device (101) and the surface (102) impossible.

8. The device (100) according to any of the aforementioned claims, wherein the information about the license plate is stored in the device (100).

9. A vehicle controller (150) operable to interact with a device (100) according to any of the aforementioned claims to authenticate the license plate number of the device (100).

10. The vehicle controller (150) according to claim 9, comprising a receiver (153) adapted to receive information about the license plate via a data link.

11. The vehicle controller (150) according to claim 9 or 10, adapted to compare the information about the license plate to predetermined information.

12. The vehicle controller (150) according to claim 9 to 11, adapted to trigger a predetermined state of the vehicle (160) depending on the result of the authentication.

13. A vehicle (160) comprising a vehicle controller (150) according to claims 9 to 12.

14. A vehicle (160) according to claim 13, comprising a connector (155) adapted to connect the vehicle controller (150) and the device (100) according to claims 1 to 8.

15. A method comprising
- receiving information about a license plate,
- comparing the information about the license plate to predetermined information,
- triggering a predetermined state of the vehicle (160) depending on the result of the comparison.
